(19) Europäisches Patentamt
European Patent Office
Office européen des brevets

(11) Veröffentlichungsnummer: **0 141 320 B1**

# (12) EUROPÄISCHE PATENTSCHRIFT

(45) Veröffentlichungstag der Patentschrift: **07.10.87**

(51) Int. Cl.[4]: **C 08 G 63/68**, C 08 G 63/60, C 08 J 5/18

(21) Anmeldenummer: **84112292.2**

(22) Anmeldetag: **12.10.84**

(54) **Thermotrope aromatische Polyester hoher Steifigkeit, Verfahren zu ihrer Herstellung und ihre Verwendung zur Herstellung von Formkörpern, Filamenten, Fasern und Folien.**

(30) Priorität: **25.10.83 DE 3338623**

(43) Veröffentlichungstag der Anmeldung: **15.05.85 Patentblatt 85/20**

(45) Bekanntmachung des Hinweises auf die Patenterteilung: **07.10.87 Patentblatt 87/41**

(84) Benannte Vertragsstaaten: **DE FR GB IT**

(56) Entgegenhaltungen:
**DE - A - 2 025 971**
**DE - A - 2 246 107**

(73) Patentinhaber: **BAYER AG, Konzernverwaltung RP Patentabteilung, D-5090 Leverkusen 1 Bayerwerk (DE)**

(72) Erfinder: **Dicke, Hans-Rudolf, Dr., Bodelschwinghstrasse 16, D-4150 Krefeld (DE)**
Erfinder: **Schmidt, Manfred, Dr., Bodelschwinghstrasse 20, D-4150 Krefeld (DE)**
Erfinder: **Witman, Mark, Dr., 1856 Taper Drive, Pittsburgh Pennsylvania 15249 (US)**
Erfinder: **El-Sayed, Aziz, Dr., Saarlauternerstrasse 39, D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

EP 0 141 320 B1

**Beschreibung**

Die Erfindung betrifft hochmolekulare thermotrope vollaromatische Polyester hoher Steifigkeit und günstiger Schmelzviskosität, ein Verfahren zu ihrer Herstellung und ihre Verwendung zur Herstellung von Formkörpern, Filamenten, Fasern und Folien.

Als «thermotrop» bezeichnet man solche Substanzen, die flüssig-kristalline Schmelzen bilden. Thermotrope Polykondensate sind hinreichend bekannt; vergleiche z.B. W.J. Jackson und H.F. Kuhfuss, J. Polymer Science, Polymer Chem. Ed. 14, 2042 (1976); F.E. McFarlane et al., Liquid Crystal Polymers II, Contemporary Topics in Polymer Science, Vol. 2, Plenum Publishing Corporation, 1977; W.C. Wooten et al., in A. Ciferri «Ultrahigh Modulus Polymers», Applied Science Publ., London 1979, S. 362f.; A. Blumenstein et al., «Liquid Crystalline Order in Polymers», Academic Press 1978; J. Preston, Angew. Makromol. Chem. 109/110, S. 1–19 (1982); A. Ciferri, W.R. Kriegbaum, R.B. Meyer «Polymer Liquid Crystals», Academic Press, New York, 1982; EP 1185, 1340, 8855, 11640, 15856, 17310, 18145, 18709, 22344, 44205, 49615; US 3991013, 3991014, 4066620, 4067852, 4083829, 4107143; WO 79/797, 79/1034, 79/1040.

Der flüssig-kristalline Zustand der Polykondensatschmelzen lässt sich mit Hilfe eines Polarisationsmikroskops untersuchen. Für die Untersuchungen war das Okular mit einem Aufsatz ausgerüstet, der eine Fotodiode im Brennpunkt der Okularlinse angeordnet enthielt. Anhand eines nachgeschalteten Messverstärkers mit Regeleinrichtung wurde der Messwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergab sich dann ein Wert von 0,01 Skalenteilen.

Die Schichtdicke der untersuchten Polykondensatschmelzen betrug 100 µm.

Die Untersuchung der flüssig-kristallinen Schmelzen erfolgte nach dem Aufschmelzen der Proben bei Temperaturen zwischen 280 und 400 °C. Sofern in diesem gesamten Bereich oder in einem Teil davon eine flüssig-kristalline Schmelze beobachtet wird, nennen wir das Polykondensat thermotrop.

Um sicherzustellen, dass die optische Anisotropie der Schmelzen auf einen flüssig-kristallinen Zustand und nicht etwa auf in der Schmelze schwimmende Kristalle des Polykondensats zurückzuführen ist, wurde die Schmelze nach der Messung noch weitere 30 °C über die Untersuchungstemperatur aufgeheizt. Kristalle schmelzen dabei auf, wodurch die optische Anisotropie der Schmelze verschwindet. Nur wenn die Aufhellung der zwischen Nicolschen Prismen beobachteten Schmelze trotz des weiteren Aufheizens nicht verschwand, wurden die Polykondensate als thermotrop eingestuft. Sie zeigten in der Messanordnung Werte über 1 Skalenteil, meist Werte von 3 bis 90 Skalenteilen. Für amorphe Schmelzen, z.B. aromatische Polycarbonate, wurden dagegen Werte von weniger als 0,1 Skalenteil gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssigkristalliner Komponenten mittels Röntgenweitwinkelstreuung in der Schmelze nachzuweisen, wie es z.B. bei G.W. Gray und P.A. Windsor, «Plastic Crystals, Physico-Chemical Properties and Methods of Investigation», insbesondere Chapter 3, John Wiley & Sons, New York, Sydney, Toronto, 1974, beschrieben ist.

Thermotrope flüssig-kristalline Polyester können durch übliche Formgebungsverfahren aus der Schmelze zu Formteilen, Filmen und Fasern mit extrem hohen mechanischen Festigkeiten verarbeitet werden.

Die DE-OS 2025971 betrifft hochmolekulare vollaromatische Polyester auf Basis von p-Hydroxybenzoesäure, aromatischen Dicarbonsäuren (wie Iso- oder Terephthalsäure) und Diphenolen (wie Hydrochinon oder 4,4'-Dihydroxydiphenyl). Aufgrund der verwendeten Komponenten sind diese Polyester thermotrop und können z.B. zu Formteilen guter mechanischer Festigkeit verarbeitet werden. Von den Polyestern der 13 Beispiele der DE-OS 2025971 schmilzt ein einziger unter 300 °C. Diese Polyester sind also als schwieirig thermoplastisch verarbeitbar einzustufen.

Die DE-OS 272786 betrifft thermotrope aromatische Polyester auf Basis von p-Hydroxybenzoesäure, Diphenolen (wie z.B. Hydrochinon) und 2,6-Naphthalindicarbonsäure.

Die EP-PS 1340 berifft thermotrope vollaromatische Polyester auf Basis von p-Hydroxybenzoesäure, 2,6-Dihydroxynaphthalin und aromatischen Dicarbonsäuren.

Die in diesen Patentschriften beschriebenen Polyester können ebenfalls zu Formteilen mit hohen mechanischen Festigkeiten verarbeitet werden. Die erzielten Festigkeiten reichen aus, um diesen Polyestern völlig neue technische Einsatzgebiete zu erschliessen. Dennoch ist es für zahlreiche Anwendungen wünschenswert, die mechanische Festigkeit der Formteile weiter zu erhöhen, ohne eine verminderte thermoplastische Verarbeitbarkeit in Kauf nehmen zu müssen.

Aufgabe der Erfindung war es daher, thermotrope vollaromatische Polyester bereitzustellen, die gegenüber den Polyestern der DE-OS 2025971 besser verarbeitbar sind gleichzeitig dennoch hervorragende mechanische Eigenschaften aufweisen.

Weitere Aufgabe der Erfindung war es, thermotrope vollaromatische Polyester zur Verfügung zu stellen, die durch thermoplastische Verformung zu Formteilen verarbeitet werden können, welche extrem hohe mechanische Eigenschaften besitzen.

Bevorzugte neue thermotrope vollaromatische Polyester sollten bei einer Temperatur unterhalb 370 °C, vorzugsweise unterhalb 350 °C, insbesondere unterhalb 330 °C thermoplastisch verarbeitbar sein. Ausserdem sollen die bevorzugten Polyester einen Biege-E-Modul von mindestens 8000, vorzugsweise von mindestens 10000 MPa besitzen (gemessen nach DIN 53457).

Überraschenderweise wurde gefunden, dass vollaromatische Polyester, deren aromatische Ringe mindestens teilweise Sulfonsäure- oder Metallsulfonatgruppen tragen, die gewünschte Kombination vorteilhafter Eigenschaften besitzen.

Gegenstand der Erfindung sind thermotrope vollaromatische Polyester auf Basis von

a) aromatischen Dicarbonsäuren,
b) Diphenolen und ggf.
c) aromatischen Hydroxycarbonsäuren,

wobei das Molverhältnis von Resten einkondensierter aromatischer Dicarbonsäuren zu Resten einkondensierter Diphenole 0,95 bis 1,05 beträgt und die Reste einkondensierter aromatischer Hydroxycarbonsäuren bis zu 100, vorzugsweise 30 bis 80, insbesondere 50 bis 70 Mol-%, bezogen auf einkondensierte Reste a) + c), ausmachen, dadurch gekennzeichnet, dass die Polyester 0,02 bis 30, vorzugsweise 0,1 bis 15, insbesondere 0,2 bis 5 Gew.-%, bezogen auf Polyester, an aromatische Ringe des Polyesters gebundene Sulfonsäure- und/oder Metallsulfonatgruppen (berechnet als Sulfonsäuregruppen) enthalten.

Weiterer Gegenstand der Erfindung ist ein Verfahren zur Herstellung dieser Polyester durch Umsetzung der Komponenten a) bis c) sowie von aromatischen Dicarbonsäuren, Diphenolen und/oder Hydroxycarbonsäuren, die zusätzlich 1–3 Sulfonsäure- und/oder Metallsulfonatgruppen pro Molekül tragen, bzw. ihrer reaktionsfähigen Derivate, ggf. in Gegenwart von Kettenabbrechern, Verzweigungsmitteln und Katalysatoren, bei Temperaturen von 160 bis 370 °C, ggf. unter vermindertem Druck.

Aromatische Dicarbonsäuren a) im Sinne der Erfindung sind alle jene Dicarbonsäuren, deren Carboxylgruppen unmittelbar an einen aromatischen Ring geknüpft sind.

Bevorzugte aromatische Dicarbonsäuren a) entsprechen der Formel

HOOC–A–COOH (I)

worin A einen bivalenten aromatischen Rest mit 6 bis 24 C-Atomen, vorzugsweise mit 6 bis 16 C-Atomen bedeutet, wobei die beiden Valenzen einen Winkel von 45 bis 180° bilden. Die bivalenten aromatischen Reste können durch 1 bis 4 $C_1$–$C_4$-Alkyl-, $C_1$–$C_4$-Alkoxy, Phenyl-, Phenoxy-, Benzyl- oder Halogenreste (vorzugsweise Chlor und Brom) substituiert sein und umfassen neben Phenylen, Naphthylen und Biphenylen auch durch Sauerstoff, Schwefel, Carbonyl, Sulfonyl, $C_1$–$C_4$-Alkylen oder -Alkyliden, Cyclohexylen oder-hexyliden oder $-O(CH_2)_nO-$ mit n = 1–4 verbundene Phenylenreste.

Bevorzugte aromatische Reste sind z. B. 1,4-Phenylen, 1,4-Naphthylen oder 4,4'-Biphenylen, worin die beiden Bindungen sich koaxial in entgegengesetzte Richtungen erstrecken, oder 1,5-Naphthylen, 2,6-Naphthylen oder 3,5'-Biphenylen, worin die beiden in entgegengesetzte Richtungen zeigenden Bindungen parallel zueinander verschoben sind, sowie 1,3-Phenylen, 1,3-, 1,6-. 1,7- oder 2,7-Naphthylen oder 3,4'-Biphenylen, worin die beiden Bindungen nicht an benachbarten Atomen lokalisiert sind und sich nicht koaxial oder parallel verschoben in entgegengesetzte Richtungen erstrecken.

Bevorzugte aromatische Dicarbonsäuren a) sind z. B. 1,4-Naphthalindicarbonsäure, 1,5-Naphthalindicarbonsäure, 2,6-Naphthalindicarbonsäure, Biphenyl-4,4'-dicarbonsäure, Biphenyl-3,3'-dicarbonsäure, Diphenoxyethan-4,4'-dicarbonsäure, Diphenylether-4,4'-dicarbonsäure, Methylterephthalsäure, Methoxyterephthalsäure, Chlorterephthalsäure, 4-Chlornaphthalin-2,7-dicarbonsäure, 1,3-Naphthalindicarbonsäure, 1,6-Naphthalindicarbonsäure, 1,7-Naphthalindicarbonsäure, 2,7-Naphthalindicarbonsäure, Biphenyl-3,4'-dicarbonsäure, Diphenylether-3,4'-dicarbonsäure, 4-Methylisophthalsäure, 5-Methylisophthalsäure und Diphenylether-4,4'-dichlor-3,3'-dicarbonsäure.

Besonders bevorzugte aromatische Dicarbonsäuren a) sind Iso- und Terephthalsäure.

Bevorzugte Diphenole b) entsprechen der Formel

HO–Z–OH (II)

worin Z einen zweiwertigen ein- oder mehrkernigen aromatischen Rest mit 6–30 C-Atomen bedeutet, wobei Z derart gebaut ist, dass die beiden OH-Gruppen direkt an je ein C-Atom eines aromatischen Systems gebunden sind und die beiden Valenzen einen Winkel von 45 bis 180° bilden. Für die Konstitution des Restes Z gilt das gleiche wie für den aromatischen Rest A oben beschrieben worden ist.

Besonders bevorzugte Diphenole b) sind z. B. Hydrochinon, 4,4'-Dihydroxydiphenyl, 4,4'-Dihydroxydiphenylether, 4,4'-Dihydroxydiphenylethan, 4,4'-Dihydroxydiphenoxyethan, 3,5'-Dihydroxydiphenyl, 3,5'-Dihydroxydiphenylether, 1,5-Dihydroxynaphthalin, 2,6-Dihydroxynaphthalin, 1,4-Dihydroxynaphthalin, Chlorhydrochinon, Bromhydrochinon, Methylhydrochinon, Phenylhydrochinon, Ethylhydrochinon, 2,2'-Dimethyl-4,4'-dihydroxydiphenyl, 3,3',5,5'-Tetramethyl-4,4'-dihydroxydiphenyl, 3,5'-Dimethoxy-4,4'-dihydroxydiphenylether, 1,2-(2-Chlor-4-hydroxyphenoxy)-ethan, 4-Methoxy-2,6-dihydroxynaphthalin, Resorcin, 3,4'-Dihydroxydiphenyl, 3,4'-Dihydroxydiphenylether, 3,4'-Dihydroxydiphenoxyethan, 1,3-Dihydroxynaphthalin, 1,6-Dihydroxynaphthalin, 1,7-Dihydroxynaphthalin, 2,7-Dihydroxynaphthalin, 4-Chlorresorcin, 4-Bromresorcin, 4-Methylresorcin, 4-Phenylresorcin, 4-Ethoxyresorcin, 2,5-Dichlor-1,6-dihydroxynaphthalin und 4-Methoxy-2,7-dihydroxynaphthalin.

Ganz besonders bevorzugte Diphenole b) sind Hydrochinon, Resorcin und 4,4'-Dihydroxydiphenyl.

Bevorzugte aromatischen Hydroxycarbonsäuren c) sind z. B. Verbindungen der Formeln

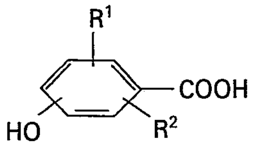
(III)

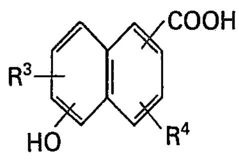
(IV)

worin $R^1$ bis $R^4$ $C_1$–$C_4$-Alkyl, $C_1$–$C_4$-Alkoxy, $C_6$–$C_{10}$-Aryl oder -Aryloxy, $C_7$–$C_{12}$-Alkylaryl (vorzugsweise Benzyl), Halogen (vorzugsweise Chlor und Brom) oder Wasserstoff bedeuten und die Valenzen zwischen Kern und Hydroxylgruppe sowie zwischen Kern und Carboxylgruppe einen Winkel von 45 bis 180° bilden.

Besonders bevorzugte aromatische Hydroxycarbonsäuren c) sind z. B. 4-Hydroxy-3-methylbenzoesäure, 4-Hydroxy-3-phenylbenzoesäure, 4-Hydroxy-2-ethylbenzoesäure, 3-Chlor-4-hydroxybenzoesäure, 3-Brom-4-hydroxybenzoesäure, 4-Hydroxy-3-methoxybenzoesäure, 4-Methyl-3-hydroxybenzoesäure, 4-Hydroxy-3-phenoxybenzoesäure, 6-Hydroxy-5-chlor-2-naphthoesäure, 6-Hydroxy-5-methyl-2-naphthoesäure, 6-Hydroxy-5-methoxy-2-naphthoesäure, 6-Hydroxy-4,7-dichlor-2-naphthoesäure.

Ganz besonders bevorzugte aromatische Hydroxycarbonsäuren c) sind unsubstituierte Hydroxycarbonsäuren, wie p-Hydroxybenzoesäure und 6-Hydroxy-2-naphthoesäure.

Wenn nach den obigen Definitionen der Winkel zwischen den Valenzen Kern/Hydroxyl und Kern/Carboxyl 45 bis 180° betragen soll, schliesst dies u. a. einen Winkel von 360°, wie er z. B. bei 8-Hydroxy-1-naphthoesäure vorliegt, aus.

Bei mindestens 40 Mol-% der zum Aufbau der erfindungsgemässen Polyester verwendeten Monomereinheiten sollten die kettenverlängernden Valenzen einen Winkel von 180° bilden, um thermotropes Verhalten der erfindungsgemässen Polyester zu gewährleisten.

Die Sulfonsäure- bzw. Metallsulfonatgruppen können grundsätzlich auf zwei verschiedenen Wegen in den Polyester eingeführt werden, nämlich entweder durch Verwendung von Komponenten a), b) und/oder c), die Sulfonsäure- bzw. Metallsulfonatgruppen enthalten, oder durch nachträgliche Sulfonierung und ggf. nachfolgende Neutralisation eines entsprechenden Polyesters.

Geeignete Komponenten sind also aromatische Hydroxycarbonsäuren, aromatische Dicarbonsäuren oder aromatische Dihydroxyverbindungen oder deren funktionelle Derivate mit einem oder mehreren an einem aromatischen Ring befindlichen Sulfonsäure- oder Metallsulfonatgruppen.

Bevorzugte Metallsulfonatgruppen enthalten z. B. Alkali- oder Erdalkali-, z. B. Natrium-, Kalium-, Lithium-, Magnesium-, Calcium-, oder z. B. Kupfer(II)-, Eisen(II)-, Zink(II)-, Ammonium- oder Eisen-(III)ionen. Es ist beispielsweise möglich, den Polyester unter Miteinkondensation eines funktionellen Natriumsulfonates der Monomertypen a) bis c) herzustellen, um das Natriumion später mittels Ionenaustausch durch ein anderes Ion, beispielsweise ein Calciumion, zu ersetzen.

Bevorzugte Monomere zum Einführen der Sulfonsäure- bzw. Metallsulfonatgruppen in den Polyester sind z. B. 3-Sulfo-4-hydroxybenzoesäure, 4-Sulfo-3-hydroxybenzoesäure, Hydrochinonsulfonsäure, 3-Sulfoisophthalsäure, Sulfoterephthalsäure, 4-Sulfonaphthalin-2,7-dicarbonsäure, 4,7-Dihydroxy-2-naphthalinsulfonsäure, 4,8-Dihydroxy-2,6-naphthalindisulfonsäure, 4,6-Dihydroxy-2-naphthalinsulfonsäure, 3,6-Dihydroxy-2-naphthalinsulfonsäure, 6,8-Dihydroxy-1,3-pyrendisulfonsäure, die Natrium- und Kaliumsalze der aufgeführten Sulfonsäure sowie die funktionellen Derivate dieser Verbindungen.

Die erfindungsgemässen Polyester können die einkondensierten Reste der Verbindungen a) bis c) sowie der sulfonsäure- und metallsulfonatsubstituierten Monomeren in statistischer Verteilung, in Segmenten oder in Blöcken enthalten, wobei als Endgruppen auch aromatische Monohydroxysulfonsäuren oder deren Alkali- oder Erdalkalisalze verwendet werden können. Diese Endgruppen können z. B. auf 3-Hydroxybenzolsulfonsäure, 4-Hydroxybenzolsulfonsäure, 4-Hydroxy-1,3-benzoldisulfonsäure, 5-Hydroxynaphthalin-1-sulfonsäure oder 6-Hydroxy-1,3,8-pyrentrisulfonsäure basieren.

Als Endgruppen können die erfindungsgemässen Polyester auch –COOH, –H, –OH, $-OC_6H_5$, Acyloxy oder von Kettenabbrechern herrührende Reste enthalten. Bevorzugte Kettenabbrecher sind monofunktionelle aromatische Hydroxylverbindungen, wie 4-Hydroxydiphenyl, p-Nonylphenol, 4-(1,1,3,3-Tetramethylbutyl)-phenol, β-Naphthol und aromatische Sulfomonocarbonsäuren, wie 3- und 4-Sulfonbenzoesäuren und aromatische Monocarbonsäuren wie Diphenylcarbonsäuren und Naphthalincarbonsäuren. Kettenabbrecher können in Mengen von 0,5 bis 5 Mol-%, bezogen auf die Summe der Komponenten a) und c), eingesetzt werden.

Gegebenenfalls können auch verzweigende drei- oder höherfunktionelle – vorzugsweise aromatische – Monomere in Mengen von 0,1 bis 1 Mol-%, bezogen auf die Summe der Komponenten a) und c), wie z. B. Phloroglucin, 1,3,5-Benzoltricarbonsäure und 3,5-Dihydroxybenzoesäure, eingesetzt werden.

Die erfindungsgemässen Polyester besitzen in der Regel eine inhärente Viskosität von mindestens 0,5, vorzugsweise von mindestens 1,0 dl/g (gemessen an einer Lösung von 5 mg Polyester/ml p-Chlorphenol bei 45 °C). Sollten Polyester in p-Chlorphenol unlöslich sein, wird angenommen, dass sie die angegebene Mindestviskosität besitzen; sie sind somit erfindungsgemäss, sofern sie den Parametern des Hauptanspruchs genügen.

Die erfindungsgemässen Polyester besitzen vorzugsweise eine Schmelzviskosität von weniger als 1000 Pa.s, gemessen bei einer Schwergeschwindigkeit von $10^3$ $sec.^{-1}$ unter Verwendung einer Düse mit einem Länge/Durchmesserverhältnis von 20 bei einer Temperatur von weniger als 360 °C, vorzugsweise weniger als 330 °C.

Die erfindungsgemässen Polyester können nach verschiedenen Verfahren hergestellt werden, z. B. durch Kondensation bzw. Umsetzung der reaktiven Derivate der Verbindungen (a) bis (c), z. B. ihrer Ester bzw. Säurechloride, und anschliessende Polykondensation.

Beispiele für bevorzugte Ausgangsverbindungen sind also ihre Arylester, ihre Acylester und ihre Säurechloride.

Nach einem bevorzugten Syntheseverfahren werden die niederen Acylester, vorzugsweise die Acetate, der Verbindungen (b) und (c) mit aromatischen Dicarbonsäuren (a) umgesetzt, wobei die Acylester auch in situ hergestellt werden können.

Die Komponenten a) bis c) sowie die sulfonsäure- bzw. metallsulfonattragenden Monomeren werden im Verhältnis, in dem sie eingesetzt werden, in den Polyester eingebaut.

Es kann zweckmässig sein, sowohl die Kondensations- bzw. Umesterungsreaktion als auch die Polykondensationsreaktion katalytisch zu beschleunigen. Derartige Katalysatoren sind bekanntlich z. B. Lewis-Säuren und Halogenwasserstoffsäuren; Oxide, Hydride, Hydroxide, Halogenide, Alkoholate, Phenolate, Salze anorganischer oder organischer Säuren (vorzugsweise Carbonsäuresalze), Komplexsalze oder Mischsalze der Erdalkalimetalle, wie z. B. Magnesium, Calcium; der Nebengruppenelemente, wie z. B. Vanadium, Titan, Mangan, Cobalt, Nickel, Zink, Lanthan, Cer, Zirkonium oder der Elemente aus anderen Gruppen des Periodensystems, wiez. B. Germanium, Zinn, Blei und Antimon oder auch die Alkalimetalle oder Erdalkalimetalle selbst, insbesondere Natrium, Natriumhydroxid, Lithiumacetat, Natriumacetat, Kaliumacetat, Calciumacetat, Magnesiumacetat, Cobaltacetat, Zinkacetat, Calciumbenzoat, Magnesiumacetylacetonat, Zinkacetylacetonat, Vanadyl-$C_1$–$C_8$-alkoxide, Titanalkoxide wie Titantetrabutylat, Titantetrapropylat, Alkoxytitansilikate, Zirkoniumbutylat, Zirkoniumpropylat, Titantetraphenolat, Natriumphenolat, Germaniumdioxid, Antimontrioxid, Dialkyl- und Diarylzinnoxid, Dibutylzinndiacetat, Di-butyl-dimethoxy-zinn. Besonders bevorzugt sind Magnesium-, Mangan-, Natrium-, Kalium- und Zinkacetat.

Die Katalysatormengen betragen vorzugsweise 0,001 bis 1, inbesondere 0,01 bis 0,2 Gew-%, bezogen auf das Gesamtgewicht der eingesetzten Monomeren.

Häufig kann aber auf den Zusatz von Katalysatoren verzichtet werden, da die zur Synthese der erfindungsgemässen Polyester verwendeten sulfonsäure- bzw. metallsulfonat-substituierten Monomeren selbst katalytisch wirksam sind.

Die erfindungsgemässen Polyester können bei Temperaturen von 160 bis 370 °C hergestellt werden, wobei man im allgemeinen die Reaktion bei niedrigen Temperaturen beginnt und die Temperatur im Verlaufe der Reaktionsfortschreitung kontinuierlich erhöht. Bei nachlassender Reaktionsgeschwindigkeit kann ein Vakuum angelegt werden, wobei der Druck vorzugsweise kontinuierlich von Normaldruck bis ca. 0,1 mbar gesenkt wird.

Das erhaltene Produkt kann vorzugsweise in Granulatform einer Festphasennachkondensation unver vermindertem Druck bei Temperaturen von 200 bis 300 °C unterworfen werden; nach in der Regel 5 bis 25 Stunden haben sich das Molekulargewicht erhöht und die daraus resultierenden Eigenschaften des Polyesters merklich gebessert.

Weiterer Gegenstand der Erfindung ist also ein Verfahren zur Herstellung der neuen Polyester durch Umsetzung der Komponenten (a) bis (c) sowie der sulfonsäure- bzw. metallsulfonat-substituierten Monomeren bzw. ihrer reaktionsfähigen Derivate, ggf. in Gegenwart von Kettenabbrechern, Verzweigungsmitteln und Katalysatoren, bei Temperaturen von 160 bis 370 °C, ggf. unter vermindertem Druck.

Die erfindungsgemässen thermotropen Polyester können infolge ihrer relativ geringen Schmelzviskosität vorteilhaft aus der Schmelze zu Spritzgussformteilen, Filamenten, Fasern und Folien verarbeitet werden, wobei durch auftretende Scherkräfte eine Molekülorientierung erzielt wird, die in hohem Masse von der Stärke der Scherkräfte beeinflusst wird. Des weiteren zeigen sie eine ausgeprägte Strukturviskosität, das heisst, dass die Schmelzviskosität bei Erhöhung der Scherkräfte stark abfällt. Geeignete Verarbeitsverfahren sind Spritzguss, Extrusion, Pressen und Schmelzspinnen.

Aus den erfindungsgemässen Polyestern können Formteile extrem hoher Zugfestigkeit, guter Zähigkeit und grosser Dimensionsstabilität hergestellt werden. Da die Polyester ausserordentlich chemekalienresistent und flammwidrig sind, eignen sie sich bevorzugt zur Herstellung von

- elektronischen Artikeln, wie z. B. Isolatoren, gedruckten Schaltungen, Steckkontakten, Armaturenteilen
- Teilen chemisch-technischer Apparate, wie z. B. Rohre, Behälterauskleidungen, Rotoren, Gleitlager, Dichtungen
- Teilen der Flugzeuginnenausstattung
- Teilen medizinisch-technischer Geräte, wie z. B. Bauteile von Klimaanlagen, Ventilteile.

Die erfindugsgemässen Polyester können aber auch als Überzugs- und Beschichtungsmaterial (pulverförmig oder dispergiert) verwendet werden. Auch zur Herstellung verstärkter oder gefüllter Formmassen mit einem Verstärker- bzw. Füllstoffgehalt von 5 bis 65 Gew-%, bezogen auf verstärkte bzw. gefüllte Formmasse, sind sie bestens geeignet.

Beispiele

Die Prüfung der Schlagzähigkeit $a_n$ und Kerbschlagzähigkeit $a_k$ erfolgte an Normkleinstäben gemäss DIN 53453 (ISO/R 179) bei 23 °C jeweils an 10 Prüfkörpern. Die Bestimmungen der Biegefestigkeit wurde an Normkleinstäben gemäss DIN 53452 (ISO/R 178) durchgeführt. Der Biege-E-Modul wurde gemäss DIN 53457 ermittelt. Die Messung der Wärmeformbeständigkeit erfolgte durch Bestimmungen der Vicat-B-Erweichungstemperatur gemäss DIN 53460 (ISO 306).

Vergleich 1

In ein 1-l-Planschliffgefäss mit Planschliffdeckel, Rührer, Stickstoffeinleitung und einem Destillationsaufsatz, der mit einem Kühler verbunden war, wurden die folgenden Substanzen eingewogen:

2,4 Mol ≙ 331,49 g p-Hydroxybenzoesäure,
1,44 Mol ≙ 239,23 g Isophthalsäure,
1,44 Mol ≙ 158,56 g Hydrochinon,
6,33 Mol ≙ 646,23 g Acetanhydrid,

0,1 g Magnesiumacetat und
0,15 g Antimontrioxid.

Unter Stickstoffatmosphäre wurde mittels Salzbad auf 170 °C erhitzt. Sobald die Destillation von Essigsäure nachliess (nach ca. 45 Minuten), wurde die Temperatur im Reaktionsgefäss im Verlauf einer Stunde auf 250 °C und im Verlauf einer weiteren Stunde auf 330 °C erhöht. Nach Beendigung der Destillation wurde der Druck im Verlauf von 30 Minuten bis auf ca. 1 mbar gesenkt.

Während dieser Vakuumphase nahm die Viskosität der entstandenen Polymerschmelze stark zu. Die Schmelze wurde daher langsamer gerührt.

Am Ende dieser Phase war eine Gesamtmenge von 709 g Essigsäure (enthält restliches Acetanhydrid) aufgefangen worden.

Der erhaltene hellbraune Polyester wurde gemahlen und bei 250 °C einer Festphasennachkondensation unterworfen (ca. 1 mbar/24 Stunden). die inhärende Viskosität des so erhaltenen Polyesters betrug 1,2 dl/g.

Beispiel 1

In die in Vergleich 1 beschriebene Reaktionsapparatur wurden die folgenden Substanzen eingefüllt:

2,4 Mol ≙ 331,40 g p-Hydroxybenzoesäure,
1,44 Mol ≙ 239,23 g Isophthalsäure,
1,2 Mol ≙ 132,13 g Hydrochinon,
0,24 Mol ≙ 54,72 g Hydrochinonsulfonsäure-K-Salz und,
6,33 Mol ≙ 646,23 g Acetanhydrid.
(kein Katalysator)

Nach dem in Vergleich 1 angegebenen Temperatur-Zeit-Programm wurde ein hellbeiger Polyester erhalten, der gemahlen und in fester Phase bei 250 °C kondensiert wurde (24 Stunden/ca. 1 mbar).

Die inhärente Viskosität des so erhaltenen Polyesters betrug 0,715 dl/g. Im Bereich von 320 °C bis 400 °C wurde eine optische anisotrope Schmelzphase beobachtet.

Vergleich 2

In das in Vergleich 1 beschriebene Reaktionsgefäss wurden die folgenden Substanzen eingefüllt:

2,4 Mol ≙ 331,49 g p-Hydroxybenzoesäure,
1,44 Mol ≙ 239,23 g Isophthalsäure,
1 Mol ≙ 110,11 g Hydrochinon,
0,44 Mol ≙ 81,93 g 4,4'-Dihydroxydiphenyl,
6,3 Mol ≙ 643,17 g Acetanhydrid,

0,5 g Magnesiumacetat und
0,5 g Antimontrioxid.

Nach dem in Vergleich 1 angegebenen Temperatur-Zeit-Programm wurde ein sehr farbheller Polyester erhalten, der gemahlen und in fester Phase bei 250 °C nachkondensiert wurde (24 Stunden/ca. 1 mbar). Die inhärente Viskosität des Polyesters betrug 0,905 dl/g. Eine optisch anisotrope Schmelzphase wurde im Bereich von 280 bis 400 °C beobachtet.

Beispiel 2

In die in Vergleich 1 beschriebene Reaktionstemperatur wurden die folgenden Substanzen eingefüllt:

2,4 Mol ≙ 331,49 g p-Hydroxybenzoesäure,
1,44 Mol ≙ 239,23 g Isophthalsäure,
1 Mol ≙ 110,11 g Hydrochinon,
0,1 Mol ≙ 18,62 g 4,4'-Dihydroxydiphenyl,
0,34 Mol ≙ 77,52 g Hydrochinonsulfonsäure-K-Salz und
6,3 Mol ≙ 643,17 g Acetanhydrid.
(kein Katalysator)

Das im Vergleich 1 beschriebene Temperatur-Zeit-Programm wurde befolgt. Es wurde ein hellbeiges Produkt erhalten. Dieses wurde gemahlen und bei 250 °C in fester Phase nachkondensiert (ca. 1 mbar/30 Stunden).

Die inhärente Viskosität des so erhaltenen Polyesters betrug 0,743 dl/g. Im Bereich von 320 °C bis 400 °C wurde eine optisch anisotrope Schmelzphase beobachtet.

Beispiel 3

In der im Vergleich 1 beschriebenen Reaktionsapparatur und nach dem dort beschriebenen Verfahren wurde ein Polyester mit folgender Zusammensetzung hergestellt:

2,4 Mol ≙ 331,49 g p-Hydroxybenzoesäure,
1,44 Mol ≙ 239,23 g Isophthalsäure,
1 Mol ≙ 110,11 g Hydrochinon,
0,34 Mol ≙ 63,31 g 4,4'-Dihydroxydiphenyl und
0,1 Mol ≙ 22,8 g Hydrochinonsulfonsäure-K-Salz.

Das erhaltene beige Produkt wurde bei 250 °C in fester Phase nachkondensiert (ca. 1 mbar/24 Stunden).

Die inhärente Viskosität des Polyesters betrug 1,086 dl/g. Im Bereich von 280 °C bis 400 °C wurde eine optisch anisotrope Schmelzphase beobachtet.

Vergleich 3

In das in Vergleich 1 beschriebene Reaktionsgefäss wurden die folgenden Substanzen eingefüllt:

2,4 Mol ≙ 331,49 g p-Hydroxybenzoesäure,
1,2 Mol ≙ 199,36 g Terephthalsäure,
1,2 Mol ≙ 202,34 g 2,6-Dihydroxynaphthalin,
5,76 Mol ≙ 588,0 g Acetanhydrid,

0,5 g Magnesiumacetat,
0,5 g Antimontrioxid.

Nach dem im Vergleich 1 angegebenen Temperatur-Zeit-Programm wurde ein graubrauner Polyester erhalten, der gemahlen und in fester Phase bei 250 °C nachkondensiert wurde (20 Studen/ca. 1 mbar). Der so hergestellte Polyester war in p-Chlorphenol unlöslich. Eine optisch anisotrope Schmelzphase wurde im Bereich von 290 bis 400 °C beobachtet.

Beispiel 4
In die im Vergleich 1 beschriebene Reaktionstemperatur und nach dem dort beschriebenen Verfahren wurde ein Polyester mit folgender Zusammensetzung hergestellt:

2,4 Mol ≙ 331,49 g p-Hydroxybenzoesäure,
1,2 Mol ≙ 199,36 g Terephthalsäure,
1 Mol ≙ 168,61 g 2,6-Dihydroxynaphthalin,
0,2 Mol ≙ 45,6 g Hydrochinonsulfonsäure-K-Salz,
5,76 Mol ≙ 588,0 g Acetanhydrid,

0,5 g Natriumacetat.

Nach der Nachkondensation in fester Phase (250 °C/24 Stunden/ca. 1 mbar) wurde ein hellbraunes, in p-Chlorphenol unlösliches Produkt erhalten. Im Bereich von 250 bis 400 °C wurde eine optisch anisotrope Schmelzphase beobachtet.

Zur Prüfung der mechanischen Eigenschaften wurden aus den Polyestern der Vergleichsbeispiele 1 bis 3 und der Beispiele 1 bis 4 durch Spritzguss Normkleinstäbe hergestellt.

Die Verarbeitung der Polyester erfolgte bei Temperaturen zwischen 300 und 330 °C. Nachfolgend sind die gemessenen Werte aufgeführt.

Tabelle

| Beispiel | Vicat B [°C] | $a_n/a_k$ [KJ/m²] | Biegefestigkeit [MPa] | Biege-E-Modul [MPa] |
|---|---|---|---|---|
| Vergleich 1 | 140 | 8/6 | 150 | 6500 |
| 1 | 160 | 7/2 | 144 | 10370 |
| Vergleich 2 | 128 | 36/32 | 132 | 5310 |
| 2 | 132 | 7/6 | 155 | 11112 |
| 3 | 127 | 51/41 | 144 | 7418 |
| Vergleich 3 | 162 | 13/10 | 157 | 10448 |
| 4 | 159 | 13/10 | 195 | 13510 |

**Patentansprüche**

1. Thermotrope vollaromatische Polyester auf Basis von
a) aromatischen Dicarbonsäuren,
b) Diphenolen und ggf.
c) aromatischen Hydroxycarbonsäuren,
wobei das Molverhältnis von Resten einkondensierter aromatischer Dicarbonsäuren zu Resten einkondensierter Diphenole 0,95 bis 1,05 beträgt und die Reste einkondensierter aromatischer Hydroxycarbonsäuren bis zu 100 Mol-%, bezogen auf einkondensierte Reste a) + c), ausmachen, dadurch gekennzeichnet, dass die Polyester 0,02 bis 30 Gew.-%, bezogen auf Polyester, an aromatische Ringe des Polyesters gebundene Sulfonsäure- und/oder Metallsulfonatgruppen (berechnet als Sulfonsäuregruppen) enthalten.

2. Polyester nach Anspruch 1, dadurch gekennzeichnet, dass sie 30 bis 80 Mol-%, bezogen auf einkondensierte Reste a) + c), Reste einkondensierter aromatischer Hydroxycarbonsäuren enthalten.

3. Polyester nach Ansprüchen 1 und 2, dadurch gekennzeichnet, dass sie 50 bis 70 Mol-%, bezogen auf einkondensierte Reste a) + c), Reste einkondensierter aromatischer Hydroxycarbonsäuren enthalten.

4. Polyester nach Ansprüchen 1–3, dadurch gekennzeichnet, dass sie 0,1 bis 15 Gew.-%, bezogen auf Polyester, an aromatische Ringe des Polyesters gebundene Sulfonsäure- und/oder Metallsulfonatgruppen enthalten.

5. Polyester nach Ansprüchen 1–4, dadurch gekennzeichnet, dass sie 0,2 bis 5 Gew.-%, bezogen auf Polyester, an aromatische Ringe des Polyesters gebundene Sulfonsäure- und/oder Metallsulfonatgruppen enthalten.

6. Verfahren zur Herstellung der Polyester nach Ansprüchen 1–5 durch Umsetzung der Komponenten a) bis c) sowie von aromatischen Dicarbonsäuren, Diphenolen und/oder Hydroxycarbonsäuren, die zusätzlich 1–3 Sulfonsäure- und/oder Metallsulfonatgruppen pro Molekül tragen, bzw. ihrer reaktionsfähigen Derivate, ggf. in Gegenwart von Kettenabbrechern, Verzweigungsmitteln und Katalysatoren, bei Temperaturen von 160 bis 370 °C, ggf. unter vermindertem Druck.

7. Verwendung der Polyester nach Ansprüchen 1–5 zur Herstellung von Formkörpern, Filamenten, Fasern und Folien.

**Claims**

1. Thermotropic fully aromatic polyesters based on
a) aromatic dicarboxylic acids,
b) diphenols and, optionally,
c) aromatic hydrocycarboxylic acids,
the molar ratio or radicals of co-condensed aromatic dicarboxylic acids to radicals of co-condensed diphenols being 0.95 to 1.05 and the radicals of co-condensed aromatic hydroxycarboxylic acids amounting to up to 100 mol %, based on the co-condensed radicals a) + c), characterised in that the polyesters contain 0.02 to 30% by weight, based on polyester, of sulphonic acid and/or metal sulphonate groups (calculated as sulphonic acid groups) bonded to aromatic rings of the polyester.

2. Polyesters according to claim 1, characterised in that they contain 30 to 80 mol %, based on the

co-condensed radicals a) + c), of radicals of co-condensed aromatic hydroxycarboxylic acids.

3. Polyesters according to claims 1 and 2, characterised in that they contain 50 to 70 mol %, based on the co-condensed radicals a) + c), of radicals of co-condensed aromatic hydroxycarboxylic acids.

4. Polyesters according to claims 1–3, characterised in that they contain 0.1 to 15% by weight, based on polyester, of sulphonic acid and/or metal sulphonate groups bonded to aromatic rings of the polyester.

5. Polyesters according to claims 1–4, characterised in that they contain 0.2 to 5% by weight, based on polyester, of sulphonic acid and/or metal sulphonate groups bonded to aromatic rings of the polyester.

6. Process for the production of the polyesters according to claims 1–5 by reacting components a) to c) and aromatic dicarboxylic acids, diphenols and/or hydroxycarboxylic acids which additionally carry 1–3 sulphonic acid and/or metal sulphonate groups per molecule, or reactive derivatives thereof, optionally in the presence of chain stoppers, branching agents and catalysts, at temperatures of 160 to 370 °C, optionally under reduced pressure.

7. Use of the polyesters according to claims 1–5 for the production of mouldings, filaments, fibres and films.

**Revendications**

1. Polyesters thermotropes entièrement aromatiques à base:
a) d'acides dicarboxyliques aromatiques,
b) de diphénols et, le cas échéant,
c) d'acides hydroxycarboxyliques aromatiques,
dans lesquels le rapport molaire des restes d'acides dicarboxyliques aromatiques incorporés par condensation aux restes de diphénols incorporés par condensation a une valeur de 0,95 à 1,05 et les restes d'acides hydroxycarboxyliques aromatiques incorporés par condensation constituent jusqu'à 100 moles %, par rapport aux restes a) + c) incorporés par condensation, caractérisés en ce que les polyesters contiennent 0,02 à 30% en poids, par rapport aux polyesters, de groupes acide sulfonique et/ou sulfonate métallique (exprimés en groupes acide sulfonique) liés à des noyaux aromatiques du polyester.

2. Polyesters suivant la revendication 1, caractérisés en ce qu'ils contiennent 30 à 80 moles %, par rapport aux restes a) + c) incorporés par condensation, de restes d'acides hydroxycarboxyliques aromatiques incorporés par condensation.

3. Polyesters suivant les revendications 1 et 2, caractérisés en ce qu'ils contiennent 50 à 70 moles %, par rapport aux restes a) + c) incorporés par condensation, de restes d'acides hydroxycarboxyliques aromatiques incorporés par condensation.

4. Polyesters suivant les revendications 1 à 3, caractérisés en ce qu'ils contiennent 0,1 à 15% en poids, par rapport aux polyesters, de groupes acide sulfonique et/ou de groupes sulfonate métallique liés à des noyaux aromatiques du polyester.

5. Polyesters suivant les revendications 1 à 4, caractérisés en ce qu'ils contiennent 0,2 à 5% en poids, par rapport aux polyesters, de groupes acide sulfonique et/ou de groupes sulfonate métallique liés à des noyaux aromatiques du polyester.

6. Procédé de production des polyesters suivant les revendications 1 à 5 par réaction des composants a) à c) ainsi que d'acides dicarboxyliques aromatiques, de diphénols et/ou d'acides hydroxycarboxyliques qui portent en outre 1 à 3 groupes acide sulfonique et/ou sulfonate métallique par molécule, ou de leurs dérivés réactifs, éventuellement en présence d'agents de terminaison de chaîne, d'agents de ramification et de catalyseurs, à des températures de 160 à 370 °C, éventuellement sous pression réduite.

7. Utilisation des polyesters suivants les revendications 1 à 5 pour la production de pièces moulées, de filaments, de fibres et de feuilles.